# EUROPÄISCHE PATENTSCHRIFT

(11) **EP 1 963 807 B1**
(45) Veröffentlichungstag und Bekanntmachung des Hinweises auf die Patenterteilung: **03.02.2016**
(21) Anmeldenummer: 06818791.3
(22) Anmeldetag: 24.11.2006
(51) Int. Cl.: G01B 7/16, G01G 3/14, G01L 1/22

(54) **PRÄZISIONSKRAFTAUFNEHMER MIT DEHNUNGSMESSELEMENTEN**
PRECISION FORCE TRANSDUCER COMPRISING STRAIN GAUGE ELEMENTS
CAPTEUR DE FORCE DE PRECISION COMPRENANT DES ELEMENTS EXTENSOMETRES

(30) Priorität: 16.12.2005 DE 102005060106
(43) Veröffentlichungstag der Anmeldung: 03.09.2008
(73) Patentinhaber: Sartorius Lab Instruments GmbH & Co. KG, 37075 Göttingen (DE)
(72) Erfinder: MUECK, Tanja, 38685 Langelsheim (DE); RELLING, Volker, 23795 Bad Segeberg (DE); SCHULZE, Werner, 37083 Göttingen (DE); STEPS, Michael, 22765 Hamburg (DE); COVIC, Helga, 37083 Göttingen (DE)
(74) Vertreter: Schneider, Peter Christian
(86) Internationale Anmeldenummer: PCT/EP2006/011272
(87) Internationale Veröffentlichungsnummer: WO 2007/073812

(56) Entgegenhaltungen:
- EP-A1- 0 227 850
- WO-A1-96/27780
- DE-A1- 3 042 506
- GB-A- 1 036 662
- JP-A- 61 010 733
- US-B1- 6 504 114

## Beschreibung

### Gebiet der Erfindung

Die Erfindung betrifft einen Präzisionskraftaufnehmer, umfassend:
- ein Federelement, das zur Erzeugung einer belastungsabhängigen Auslenkung eingerichtet ist, und
- Dehnungsmesselemente, die zur Umformung der Auslenkung in ein elektrisches Signal eingerichtet sind,
wobei das Federelement an mindestens einem Ende ein Endstück aus einem anderen Material als dem der Legierung des Federelementes aufweist, welches durch Schweißen mit dem Federelement verbunden ist.

### Stand der Technik

Derartige Kraftaufnehmer sind bekannt aus der WO 96/27780 A1.

Aus der DE 103 50 085 A1 sind Präzisionskraftaufnehmer mit materialeinheitlich ausgebildetem Federelement bekannt, wobei das Federelement aus einer ausscheidungshärtbaren Nickel-Basis-Legierung mit einem Nickel-Gehalt zwischen 36 und 60% und einem Chrom-Gehalt zwischen 15 und 25% besteht und die Dehnungsmesselemente aus einem polymerfreien Schichtsystem bestehen.

Aus der GB 1 036 662 ist ebenfalls ein Kraftaufnehmer mit ähnlichen Merkmalen bekannt, wobei diese Druckschrift jedoch keine Mengenangaben zu Legierungsbestandteilen macht.

Aus der JP 61 010 733 A ist allgemein ein Kraftaufnehmer mit einem Nickel-Chrom-Stahlkörper und Dehnungsmessstreifen bekannt.

Kraftaufnehmer deutlich höherer Präzision sind bekannt aus der DE 195 11 353 C1.

Ähnliche Kraftaufnehmer sind aus der DE 30 42 506 A1 bekannt, wobei diese Druckschrift jedoch keine Mengenangaben zu Legierungsbestandteilen macht.

Will man die Genauigkeit dieser Präzisionskraftaufnehmer erhöhen, so stellt vor allem das Kriechen und die Hysterese ein großes Problem dar. Ein Ansatz zur Verbesserung war hier die Benutzung von kriecharmen Stahlsorten mit spezieller Wärmebehandlung - z. B. so genannte Maraging-Stähle. Auch austenitische Stähle mit Nanostruktur und blockierten Versetzungen sind schon vorgeschlagen worden (DE 198 13 459 A1). Ein anderer Lösungsansatz ist die Benutzung von Aluminiumlegierungen, wobei das Kriechen dieses Materials durch ein entgegengesetztes Kriechen der üblichen Dehnungsmessstreifen kompensiert wird. Das Kriechen der üblichen Dehnungsmessstreifen rührt von der Polymerfolie, die die Basisschicht des Dehnungsmessstreifens bildet, und von dem benutzten Kleber zwischen Dehnungsmessstreifen und Federelement her. Da die beiden Kriecheffekte verschieden temperaturabhängig sind, gelingt diese Kompensation jedoch höchstens in einem geringen Temperaturbereich. - Alle diese bekannten Lösungen erlauben jedoch nur eine sinnvolle Auflösung der Präzisionskraftaufnehmer von ca. 50.000 Schritten. Wird der Präzisionskraftaufnehmer für eichfähige Waagen eingesetzt, so sind damit nur ca. 3 x 3000 eichfähige Schritte möglich.

Ein weiterer, bei üblichen Dehnungsmessstreifen auftretender Fehlereffekt ist die Feuchteempfindlichkeit von Kleberschicht und Trägerfolie. Hochauflösende Präzisionskraftaufnehmer können aufgrund der auftretenden Kraftnebenschlüsse nur begrenzt gegen Feuchteeinflüsse gekapselt werden, damit stellt die Feuchteempfindlichkeit eines konventionellen Dehnungsmessstreifens ebenfalls einen auflösungsbegrenzenden Faktor beim Bau von Präzisionskraftaufnehmern dar.

Aus der eingangs genannten, gattungsbildenden WO 96/27780 A1 ist ein Kraftaufnehmer bekannt, an dessen zentrales Federelement Endblöcke aus einem gegenüber dem Material des Federeleemntes steiferen Material angeschweißt sind. Diese Endblöcke dienen als steife Schnittstellen zur Kraft- bzw. Gegenkraft-Einleitungselementen und sollen insbesondere die außermittige Einleitung von Kräften sowie des Auftreten von Scherkräften reduzieren. Die oben erläuterte Problematik des Kriechens, insbesondere der Dehnmessstreifen wird in der genannten Druckschrift nicht thematisiert und durch bei dem offenbarten Kraftaufnehmer auch nicht gelöst.

Schließlich ist aus der EP 0 227 850 A1 ist ein Kraftaufnehmer mit als Doppelbiegebalken ausgebildeter Messfeder bekannt, deren Endstummel jeweils mit einem rahmenartigen Verbindungselement, über welches die Einleitung der Kraft bzw. Gegenkraft erfolgt, verklebt sind. Dies vereinfacht die mechanische Kontaktierung zu den mit der Kraft bzw. der Gegenkraft beaufschlagten Elementen, trägt jedoch nichts zur Lösung der oben erläuterten Genauigkeits-Problematik bei - weder im Hinblick auf die Gestaltung der Messfeder noch im Hinblick auf die Fixierung der Dehnmessstreifen.

### Aufgabenstellung

Aufgabe der Erfindung ist es daher, einen Präzisionskraftaufnehmer der eingangs genannten Art anzugeben, der eine deutlich höhere Genauigkeit erlaubt.

### Darlegung der Erfindung

Diese Aufgabe wird in Verbindung mit den Merkmalen des Oberbegriffs von Anspruch 1 dadurch gelöst, dass das Federelement aus einer ausscheidungshärtbaren Nickel-Basis-Legierung mit einem Nickel-Gehalt zwischen 36 und 60% und einem Chrom-Gehalt zwischen 15 und 25% besteht und die Dehnungsmesselemente aus einem polymerfreien Schichtsystem bestehen,
wobei das Schichtsystem für die Dehnungsmesselemente aufgesputtert ist und die Schichtfolge aufweist:
- Isolierschicht aus SiO2 oder AL2O3,
- dehnungsempfindliche Schicht aus einer ternären NiCr-Legierung,
- Abdeckschicht aus Si02 oder Al2O3.

Bevorzugte Ausführungsformen sind Gegenstand der abhängigen Ansprüche.

Die Benutzung von ausscheidungshärtbaren Nickel-Basis-Legierungen als Federelement ist an sich bekannt. Beispielsweise ist in der oben bereits erwähnten DE 103 50 085 A1 ein Kraftsensor für eine Bremse beschrieben, bei dem ein ausscheidurigshärtbarer Stahl - vorzugsweise vom Typ 17-4 PH oder Inconel 718 - als Material des Federelementes benutzt wird und bei dem als Dehnungsmesselemente Halbleiter-Dehnungsmesselemente aus Silizium eingesetzt sind, die mittels Bleiborat-Glaslot mit dem Federelement verbunden sind. Halbleiter-Dehnungsmesselemente weisen jedoch einen hohen Temperaturkoeffizienten auf, sodass mit diesem Kraftsensor keine hohe Genauigkeit in einem größeren Temperaturbereich erreichbar ist. Außerdem führt eine kraftmäßige Ankopplung über Glaslote zu erheblichen inneren Spannungen im Siliziumchip, da die genannten Federmaterialien deutlich andere thermische Ausdehnungskoeffizienten als Silizium haben. Da Glasmaterialien unter Krafteinfluss zum Fließen neigen, ist bei einem glashaltigen Kraftübertragungssystem mit erheblichen Kriecheffekten zu rechnen, die den Bau eines Präzisionskrattaufinehmers unmöglich machen.

Erst durch die Kombination der ausscheidungshärtbaren Nickel-Basis-Legierung, die ein sehr geringes Kriechen, einen über große Temperaturbereiche nahezu konstanten E-Modul und eine hohe Festigkeit aufweist, mit dem polymerfreien Schichtsystem als Dehnungsmesselement ist eine deutliche Steigerung der Genauigkeit des Präzisionskraftaufnehmers erreichbar. Durch den Wegfall der Polymerbasisschicht und des Klebers ist dieses Schichtsystem ebenfalls sehr kriecharm und feuchteunempfindlich. Dadurch kann eine sinnvolle Auflösung von über 200.000 Schritten realisiert werden. Die schwierige Bearbeitbarkeit dieser Materialklasse wird dabei in Kauf genommen.

Als ausscheidungshärtbare Nickel-Basis-Legierung wird vorteilhafterweise eine Legierung mit einem Nickel-Gehalt zwischen 50 und 55% und einem Chrom-Gehalt zwischen 17 und 21% eingesetzt. Die unter der Werkstoff-Nummer 2.4668 gemäß EN 10027-2 genormte Legierung gehört z. B. zu dieser Legierungsklasse.

Das polymerfreie Schichtsystem wird vorteilhafterweise durch einen Dünnschichtprozess, vorzugsweise einen PVD- oder CVD-Prozess auf das Federelement aufgebracht; PVD bezeichnet dabei Physical Vapour Deposition und CVD Chemical Vapour Deposition. Das Schichtsystem weist vorteilhafterweise die folgende Schichtfolge auf: Isolierschicht aus SiO2, Al2O3 oder einer ähnlichen Legierung aus einem isolierenden Werkstoff, dehnungsempfindliche Schicht aus einer ternären Legierung mit Ni und Cr als Hauptbestandteile und schließlich optional eine Schutzschicht aus Si02, Al2O3 oder einer ähnlichen Legierung aus einem isolierenden Werkstoff. Die ternäre NiCr-Legierung kann dabei durch die Wahl des dritten Legierungsbestandteiles und durch geeignete Prozessführung so angepasst werden, dass sich ein möglichst geringer Temperaturkoeffizient des kompletten Präzisionskraftaufnehmers ergibt.

Um beim Ausbringen der Dehnungsmesselemente - also z. B. beim Aufsputtern - möglichst viele Federelemente in einem Arbeitsgang herstellen zu können, wird das eigentliche Federelement zweckmäßigerweise möglichst klein ausgebildet. Dies eigentliche Federelement wird dann vorteilhafterweise an den Enden durch angeschweißte Endstücke ergänzt, um gute Befestigungsmöglichkeiten des Präzisionskraftaufnehmers sowie an den individuelle Anwendungsfall angepasste Krafteinleitungselemente möglich zu machen.

In einer vorteilhaften Weiterbildung weist das Federelement die Form einer Parallelführung auf. Der Präzisionskraftaufnehmer ist dann unempfindlich gegen schwankende Krafteinleitungspunkte. Bei der Benutzung des Präzisionskraftaufnehmers als Wägezelle kann dann eine Waagschale direkt am Krafteinleitungsbereich des Präzisionskraftaufnehmers oder am zugehörigen Endstück befestigt werden.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: einen Überblick über den Präzisionskraftaufnehmer in perspektivischer Darstellung,
- Figur 2:: das Schichtsystem des Dehnungsmesselementes im Schnitt,
- Figur 3:: einen Präzisionskraftaufnehmer mit Endstücken in Seitenansicht.

### Beschreibung bevorzugter Ausführungsformen

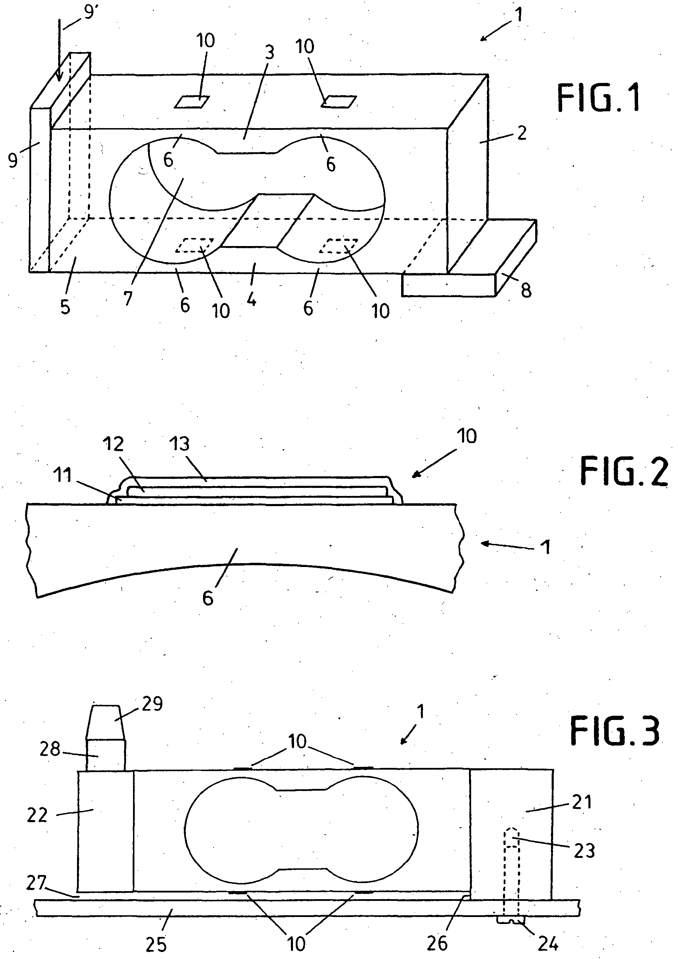

Der Präzisionskraftaufnehmer in Figur 1 besitzt ein Federelement 1, das einen gehäusefesten Bereich 2, einen oberen Lenker 3, einen unteren Lenker 4 und einen Krafteinleitungsbereich 5 aufweist. Die federnden Bereiche des Federelementes 1 sind vor allem die Dünnstellen 6, während die restlichen Bereiche aufgrund ihrer geometrischen Gestalt weitgehend steif sind. Das ganze Federelement 1 ist durch den inneren Hohlraum 7 aus einem einzigen Stück herausgearbeitet. Das Material ist dabei vorzugsweise eine ausscheidungshärtbare Nickel-Basis-Legierung mit einem Nickel-Gehalt zwischen 50 und 55% und einem Chrom-Gehalt zwischen 17 und 21%. Aufgrund der schwierigen Bearbeitbarkeit dieses Materials, ist die Geometrie so gewählt, dass auch Fertigungsverfahren für schwerbearbeitbare Materialien wie z. B. das Drahterodieren möglich sind. Auf den Dünnstellen 6 befinden sich die Dehnungsmesselemente 10, deren Aufbau anhand von Figur 2 noch genauer erläutert wird. Das Federelement 1 ist an einem nur schematisch angedeuteten Gehäuse 8 befestigt. Die Einleitung der zu messenden Kraft, die in Figur 1 durch den Kraftpfeil 9' angedeutet ist, erfolgt über ein anwendungsspezifisches Krafteinleitungsteil 9, das in Figur 1 ebenfalls nur schematisch angedeutet ist. Da das dargestellte Federelement 1 die Form einer Parallelführung hat, kann bei Benutzung des Präzisionskraftaufnehmers als Wägezelle am Krafteinleitungsteil 9 direkt eine Waagschale befestigt werden (nicht dargestellt).

Details des benutzten polymerfreien Dehnungsmesselementes 10 ergeben sich aus Figur 2: Die Dehnungsmesselemente 10 bestehen aus einer Dünnschichtstruktur, die vorzugsweise mittels PVD- bzw. CVD- Prozess abgeschieden wird. Die direkt auf das Federelement abgeschiedene Isolierschicht 11 besteht vorzugsweise aus Al2O3, SiO2 oder Si2N3, die mittels Plasmaabscheidung porenarm abgeschieden wird. Bei der Abscheidung variiert die exakte Zusammensetzung, sodass bei der fertigen Isolierschicht häufig nicht die exakte stöchiometrische Zusammensetzung vorliegt. Statt einer einzigen Isolierschicht sind auch Kombinationen aus mehreren verschiedenen Schichten möglich. Ziel dabei ist es, bei möglichst geringer Schichtdicke eine zuverlässige Isolierung zwischen dem Federelement und der folgenden dehnungsempfindlichen Schicht zu erreichen. Für die dehnungsempfindliche Schicht 12 werden vorzugsweise ternäre NiCr-Legierungen eingesetzt, die bei geeigneter Prozessführung des Sputterprozesses und durch geeignete Wahl der dritten Legierungskomponente in ihrer Zusammensetzung so modifiziert werden können, dass sich auf dem vorgeschlagenen Federmaterial eine Temperaturabhängigkeit der scheinbaren Dehnung von Null ergibt. Als zusätzlicher rückwirkungsfreier Schutz kann optional eine weitere Abdeckschicht 13 aus oben genannten Isoliermaterialien abgeschieden werden. Da die polymerfreie Dünnschichtstruktur nur aus Materialien besteht, die praktisch kein Wasser aufnehmen, kann für viele Anwendungsfälle auf die zusätzliche Abdeckschicht verzichtet werden.

Alle Schichten sind in Figur 2 nicht maßstäblich gezeichnet: Die einzelnen Schichten der Dehnungsmesselemente 10 haben Dicken im µm-Bereich, während die Dicke der Dünnstellen 6 je nach Lastbereich des Präzisionskraftaufnehmers im mm-Bereich liegt.

In Figur 2 sind nur die für die Funktion wesentlichen Schichten dargestellt. Die z. B. für die Kontaktierung notwendigen Strukturen kann jeder Fachmann leicht ergänzen. Für die Kontakttrukturen wird vorzugsweise ein Schichtsystem aus gesputtertem Gold und Nickel eingesetzt. Die Nickelschicht dient dabei zusätzlich als Diffusionssperre, um die Langzeitstabilität der dehnungsempfindlichen ternären NiCr-Schicht zu gewährleisten. - Häufig werden auch Sensorstrukturen aus Materialien, die einen großen Temperaturkoeffizienten des elektrischen Widerstandes aufweisen, aufgebracht. Damit lässt sich ein evtl. vorhandener Temperaturkoeffizient des kompletten Präzisionskraftaufnehmers korrigieren.

In Figur 3 ist ein Präzisionskraftaufnehmer gezeigt, der seitlich neben dem Federelement 1 Endstücke 21 und 22 aufweist. Die Endstücke sind vorzugsweise aus einem leichter bearbeitbaren Material hergestellt. Dadurch lassen sich einfachere Befestigungsmöglichkeiten und kompliziertere Formen realisieren. Das Endstück 21 weist z. B. eine Gewindebohrung 23 auf, wodurch der Präzisionskraftaufnehmer leicht an einem Gehäuseteil 25 festgeschraubt werden kann (Schraube 24). Das Endstück 21 ist im unteren Bereich etwas länger als das Federelement 1 ausgebildet, so dass ein Vorsprung 26 entsteht. Dadurch kann der Präzisionskraftaufnehmer gut an einem ebenen Gehäuseteil 25 - wie z. B. einem ebenen Bodenblech - angeschraubt werden und es entsteht ein Spalt 27, der die Maximalauslenkung des Federelementes 1 begrenzt. Das andere, rechteckige Endstück 22 weist in seinem oberen Bereich einen runden Schaft 28 mit einem konusförmigen Ende 29 auf. Dadurch kann dort direkt eine übliche runde Waagschale (nicht dargestellt) aufgesetzt werden. Die Verbindung zwischen dem Federelement 1 und den Endstücken 21 und 22 erfolgt durch Schweißen. Es ist jedoch auch eine Klebeverbindung möglich, da diese Klebung wegen der relativ großen Klebefläche eine geringe spezifische Belastung aufweist. Ein eventuelles Kriechen dieser Klebefläche ist ja unkritisch, da dadurch die Genauigkeit des Präzisionskraftaufnehmers nicht beeinflusst wird und sich nur die Breite des Spaltes 27 - und damit die Überlastgrenze - geringfügig ändert. Es ist daher auch möglich, die Endstücke aus Kunststoff herzustellen und diesen Kunststoff direkt an das Federelement 1 anzuspritzen. Dieses Verfahren ist unter dem Namen Incertmoulding bekannt. Selbstverständlich ist es auch möglich, für das Endstück 21 ein anderes Material und/oder eine andere Verbindungstechnologie als für das Endstück 22 zu wählen. Selbstverständlich ist es auch möglich, nur ein Endstück 21 oder 22 vorzusehen.

### Bezugszeichenliste

- 1: Federelement
- 2: gehäusefester Bereich
- 3: oberer Lenker
- 4: unterer Lenker
- 5: Krafteinleitungsbereich
- 6: Dünnstelle
- 7: innerer Hohlraum
- 8: Gehäuse
- 9: Krafteinleitungsteil
- 9': Kraftpfeil
- 10: Dehnungsmesselement
- 11: Isolierschicht
- 12: dehnungsempfindliche Schicht
- 13: Abdeckschicht
- 21, 22: Endstücke
- 23: Gewindebohrung
- 24: Schraube
- 25: Gehäuseteil
- 26: Vorsprung
- 27: Spalt
- 28: Schaft
- 29: konusförmiges Ende

## Patentansprüche

1. Präzisionskraftaufnehmer, umfassend:
- ein Federelement (1), das zur Erzeugung einer belastungsabhängigen Auslenkung eingerichtet ist, und
- Dehnungsmesselemente (10), die zur Umformung der Auslenkung in ein elektrisches Signal eingerichtet sind,
wobei das Federelement (1) an mindestens einem Ende ein Endstück (21, 22) aus einem anderen Material als dem der Legierung des Federelementes (1) aufweist, welches durch Schweißen mit dem Federelement (1) verbunden ist, **dadurch gekennzeichnet,**
**dass** das Federelement (1) aus einer ausscheidungshärtbaren Nickel-Basis-Legierung mit einem Nickel-Gehalt zwischen 36 und 60% und einem Chrom-Gehalt zwischen 15 und 25% besteht und
die Dehnungsmesselemente (10) aus einem polymerfreien Schichtsystem bestehen,
wobei das Schichtsystem für die Dehnungsmesselemente (10) aufgesputtert ist und die Schichtfolge aufweist:
- Isolierschicht aus SiO2 oder AL2O3,
- dehnungsempfindliche Schicht aus einer ternären NiCr-Legierung,
- Abdeckschicht aus SiO2 oder Al2O3.

2. Präzisionskraftaufnehmer nach Anspruch 1,
**dadurch gekennzeichnet,**
**dass** als ausscheidungshärtbare Nickel-Basis-Legierung eine Legierung mit einem Nickel-Gehalt zwischen 50 und 55% und einem Chrom-Gehalt zwischen 17 und 21% benutzt ist.

3. Präzisionskraftaufnehmer nach einem der Ansprüche 1 bis 2,
**dadurch gekennzeichnet,**
**dass** das Federelement (1) die Form einer Parallelführung aufweist.

4. Präzisionskraftaufnehmer nach einem der vorangehenden Ansprüche,
**dadurch gekennzeichnet,**
**dass** als ausscheidungshärtbare Nickel-Basis-Legierung die Legierung mit der Werkstoffnummer 2.4668 gemäß EN 10027-2 benutzt ist.

## Claims

1. Precision force transducer, comprising:
- a spring element (1) arranged to produce a load-dependent deflection and
- strain gauge elements (10) arranged to convert the deflection into an electrical signal,
wherein the spring element (1) has at at least one end an end member (21, 22) of a material which is different from that of the alloy of the spring element (1) and which is connected with the spring element (1) by welding,
**characterised in that**
the spring element (1) consists of a precipitation-hardenable nickel-base alloy with a nickel content between 36 and 60% and a chromium content between 15 and 25% and
the strain gauge elements (10) consist of a polymer-free layer system,
wherein the layer system for the strain gauge elements (10) is sputtered and the layer sequence comprises:
- insulating layer of SiO₂ or Al₂O₃,
- strain-sensitive layer of a ternary NiCr alloy and
- cover layer of SiO₂ or Al₂O₃.

2. Precision force transducer according to claim 1, **characterised in that** an alloy with a metal content between 50 and 55% and a chromium content between 17 and 21% is used as precipitation-hardenable nickel-base alloy.

3. Precision force transducer according to one of claims 1 and 2, **characterised in that** the spring element (1) has the form of a parallel guide.

4. Precision force transducer according to any one of the preceding claims, **characterised in that** the alloy with the material number 2.4668 according to EN 10027-2 is used as precipitation-hardenable nickel-base alloy.

## Revendications

1. Capteur de force de précision comprenant :
- un élément de ressort (1) qui est étudié pour la génération d'une élongation en fonction de la sollicitation, et
- des éléments extensiométriques (10) qui sont étudiés pour la conversion de l'élongation en un signal électrique,
dans lequel l'élément de ressort (1) présente, sur au moins une extrémité, un embout (21, 22) en un matériau différent de celui de l'alliage de l'élément de ressort (1), lequel est relié par soudage à l'élément de ressort (1),
**caractérisé en ce que**
l'élément de ressort (1) se compose d'un alliage à base de nickel pouvant durcir par précipitation avec une teneur en nickel entre 36 et 60 % et une teneur en chrome entre 15 et 25 %, et
les éléments extensiométriques (10) se composent d'un système de couches exempt de polymères,
dans lequel le système de couches pour les éléments extensiométriques est déposé par pulvérisation, et la succession de couches présente :
- une couche isolante en Si02 ou AL203,
- une couche sensible à l'extension en un alliage de NiCr ternaire,
- une couche de recouvrement en Si02 ou A1203.

2. Capteur de force de précision selon la revendication 1,
**caractérisé en ce que**,
en guise d'alliage à base de nickel pouvant durcir par précipitation, on utilise un alliage avec une teneur en nickel entre 50 et 55 % et une teneur en chrome entre 17 et 21 %.

3. Capteur de force de précision selon l'une des revendications 1 à 2,
**caractérisé en ce que**
l'élément de ressort (1) présente la forme d'un guidage parallèle.

4. Capteur de force de précision selon l'une des revendications précédentes,
**caractérisé en ce que**,
en guise d'alliage à base de nickel pouvant durcir par précipitation, on utilise l'alliage avec le numéro de matériau 2.4668 conformément à la norme EN 10027-2.
